Europäisches Patentamt

(19) European Patent Office

Office européen des brevets

(11) Numéro de publication: **0 030 889**
**B1**

(12) **FASCICULE DE BREVET EUROPEEN**

(45) Date de publication du fascicule du brevet:
18.04.84

(51) Int. Cl.³: **G 01 N 27/20**, G 01 N 3/00

(21) Numéro de dépôt: **80401755.6**

(22) Date de dépôt: **08.12.80**

(54) Procédé et dispositif de contrôle non destructif des soudures par points.

(30) Priorité: **14.12.79 FR 7930700**

(43) Date de publication de la demande:
**24.06.81 Bulletin 81/25**

(45) Mention de la délivrance du brevet:
**18.04.84 Bulletin 84/16**

(84) Etats contractants désignés:
**DE FR GB IT NL SE**

(56) Documents cités:
**FR - A - 1 498 864**
**FR - A - 2 400 706**
**GB - A - 1 282 812**

**ELECTRONICS, vol. 48, no. 7, 3 avril 1975, New York, US, J.R. PIVNICKNY et al.: "Four-point method tests solder joints", pages 106, 107**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Bachet, Bernard, 30, rue Désiré Nisard, F-21160 Marsannay La Cote (FR)**
Inventeur: **Doucelance, Claude, 2, Allée Van Gogh, F-21240 Talant (FR)**

(74) Mandataire: **Mongrédien, André et al, c/o BREVATOME 25, rue de Ponthieu, F-75008 Paris (FR)**

ACTORUM AG

Procédé et dispositif de contrôle non destructif des soudures par points

La présente invention concerne un procédé et un dispositif de contrôle non destructif des soudures par points.

L'invention se rapporte plus particulièrement à un procédé qui permet de mesurer le diamètre des soudures et d'en déduire l'efficacité de ces soudures.

Plusieurs méthodes de contrôle non destructif ont été proposées pour contrôler industriellement les soudures par points. Parmi ces méthodes, on peut citer la méthode Fokker, l'analyse de signature par impédance mécanique et la mesure de la résistance électrique de la pièce soudée.

La méthode Fokker utilisée pour contrôler la cohésion d'un collage de plaques métalliques n'est pas utilisable pour un contrôle de soudures par points. La raison réside dans le fait que l'état de surface des soudures n'est pas identique d'une soudure à l'autre. Il s'ensuit des variations de couplage entre la structure des soudures et le capteur piézoélectrique qui permet de mettre en oeuvre cette méthode, variations qui ont pour effet de masquer les variations dues à la qualité des soudures.

La deuxième méthode, basée sur l'analyse de signature par impédance mécanique, a donnée de meilleurs résultats que la précédente. Cette méthode de mise en oeuvre très lourde, utilisant tout un ensemble de mesures et d'appareils pour tracer un diagramme d'impédance mécanique, permet un contrôle global de la santé de toutes les soudures d'une pièce métallique, mais ne permet pas le contrôle de chaque soudure séparément, ni la détermination du diamètre de cette soudure.

La troisième méthode, encore appelée la méthode rhéométrique est illustrée dans le document FR-A-1 498 864 et dans le document Electronics, vol. 48, n° 7, 3 avril 1975 (US), «Four-point method tests solder joints» pages 106 à 107. Dans ces documents, la mise en oeuvre de cette méthode ne permet pas de mesurer le diamètre d'une soudure et donc d'en déduire à coup sûr sont efficacité.

L'invention a pour but de remédier à ces inconvénients et notamment de permettre de mesurer le diamètre d'une soudure, donc d'en déduire son efficacité. De plus, cette méthode de contrôle non destructif de soudures par points est une méthode de mise en oeuvre simple et indépendante de l'état de surface de la soudure.

L'invention a donc pour objet un procédé et un dispositif de contrôle non destructif de soudures par points d'une pièce soudée, comme ils sont énoncés dans les deux revendications 1 et 4 respectivement.

Dans le procédé, selon l'invention, les soudures subissent, d'abord, un test mécanique permettant d'éprouver les soudures, au cours duquel les soudures dites «collées» sont détruites, puis les soudures restant intactes sont soumises chacune à un contrôle ponctuel basé sur la méthode rhéométrique.

Le test mécanique selon un mode de réalisation de l'invention permettant de détruire les soudures dites «collées», consiste à créer avantageusement un certain nombre de chocs tout autour de la zone de soudure ou sur la soudure à étudier, pendant un court instant, à l'aide d'un outil à percussion. Cet outil est fixé sur une colonne et est relié à une électrovanne pour que le point d'impact soit reproductible.

Selon l'invention, le contrôle ponctuel de chaque point de soudure est effectué à l'aide de la méthode rhéométrique qui consiste à faire circuler, entre deux électrodes d'alimentation, ou plus, en contact avec la zone de soudure à étudier et situées de part et d'autre de la surface de soudure, un courant électrique, et à mesurer aux bornes de deux électrodes de mesure ou plus, situées de part et d'autre de la surface de la soudure, une différence de potentiel. Cette différence de potentiel prend une valeur bien définie pour un courant donné, dans le cas d'une soudure saine, tandis que cette différence de potentiel subit des variations pour toute perturbation ou singularité à l'intérieur de la soudure. De plus, dans le cas d'une soudure saine, cette différence de potentiel permet de déduire, de façon simple, le diamètre de la soudure donc d'en déduire son efficacité.

Le dispositif mettant en oeuvre le procédé de contrôle électrique non destructif de soudures par points comprend un système de détection formé de deux têtes de mesure identiques, constituées chacune par $\underline{n}$ paires d'électrodes d'alimentation permettant de faire circuler un courant électrique dans la zone de soudure à étudier et par $\underline{n}$ paires d'électrodes de mesure permettant de mesurer une différence de potentiel dans ladite zone de soudure, $\underline{n}$ étant un entier différent de zéro, chaque paire d'électrodes d'alimentation appartenant à une même tête de mesure étant associée à une paire d'électrodes de mesure appartenant à la même tête de mesure, les deux têtes de mesure étant placées de part et d'autre de la zone de soudure et reliées à une alimentation stabilisée en courant continu, à un ensemble de mesures et à un appareillage de visualisation.

Selon un mode de réalisation de l'invention, chaque paire d'électrodes de mesure est aligné avec la paire d'électrodes d'alimentation qui lui est associée et est placée de façon symétrique par rapport au centre de la soudure de telle façon que les électrodes de mesure d'une même paire soient distantes au plus de 11 mm entre elles et que chaque électrode d'alimentation associée soit distante, au plus, de 2 mm de chaque électrode de mesure. Les électrodes de mesure d'une même tête de mesure sont reliées électriquement entre elles de façon à mesurer la résultante des différences de potentiel qui existent entre chaque électrode de mesure de l'une des deux têtes et l'électrode correspondante de l'autre tête, tandis que les électrodes d'alimentation d'une même tête de mesure sont reliées entre elles par l'intermédiaire d'au moins une résistance permettant d'obtenir un courant constant dans chaque électrode d'alimentation.

Ce dispositif présente un certain nombre d'avantages, en particulier l'intensité du courant utilisé pour alimenter les électrodes est assez faible, ce qui permet de rendre l'installation portable. De plus, ce dispositif de contrôle est insensible à l'état de surface de la soudure (effondrement, soufflures, etc...).

D'autres caractéristiques et avantages de l'invention ressortiront mieux à l'aide de la description qui va suivre, donnée à titre purement illustratif et non limitatif, en référence aux figures annexées dans lesquelles:

— la figure 1 représente un schéma général du dispositif de contrôle non destructif des soudures par points,

— la figure 2 représente schématiquement les deux têtes de mesures, selon un premier mode de réalisation de l'invention,

— la figure 3 représente les différentes étapes du procédé de contrôle des soudures selon l'invention,

— la figure 4 représente schématiquement une vue de dessus du dispositif selon un deuxième mode de réalisation de l'invention,

— la figure 5 représente schématiquement une vue de côté du dispositif de la figure 4,

— la figure 6 représente des courbes reliant la tension au diamètre de la soudure à contrôler.

De façon à faciliter la description, les dimensions des différents éléments décrits n'ont pas été respectées. De plus, les soudures à contrôler ont été schématisées sous la forme d'un disque ou de circonférences.

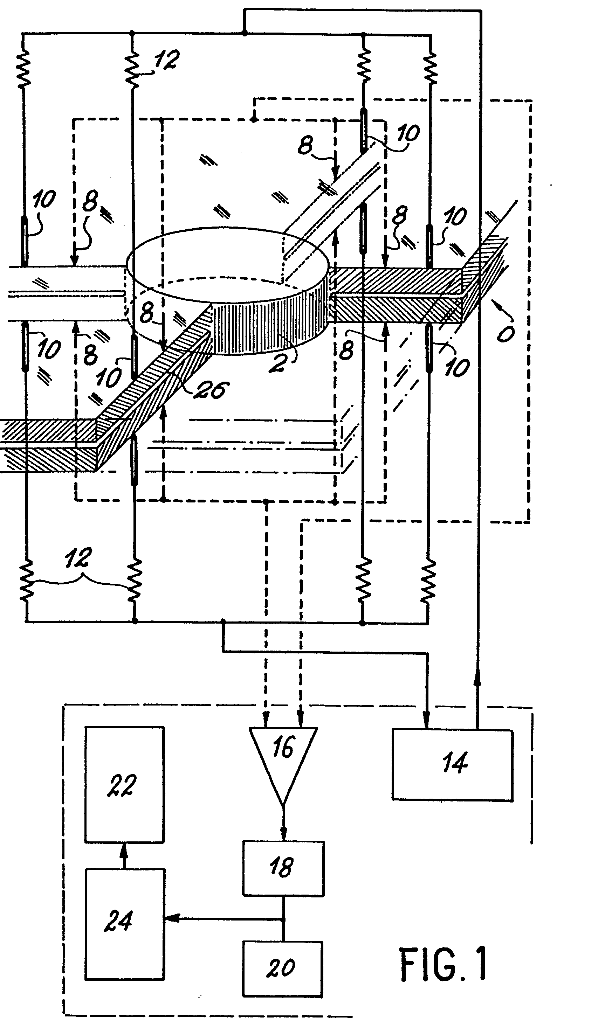

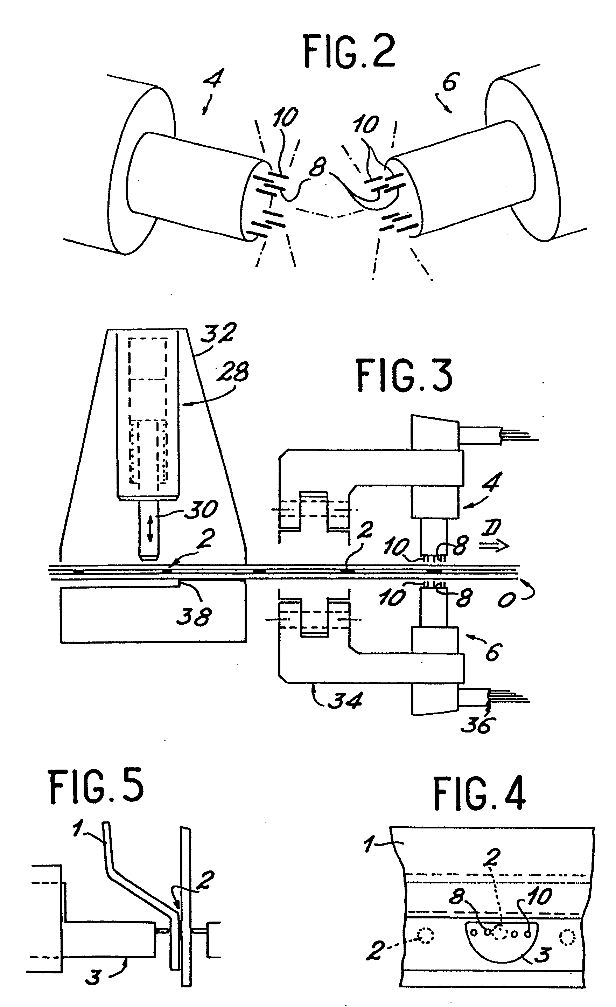

La soudure 2 schématisée sur la figure 1 de la pièce plate soudée 0 est placée entre deux têtes de mesure identiques 4 et 6, représentées sur les figures 2 et 3. La tête de mesure 4 représente la tête supérieure, la tête de mesure 6 la tête inférieure. Les têtes de mesure 4 et 6 comprennent chacune quatre électrodes de mesure 8 (soit deux paires) et quatre électrodes d'alimentation 10 (soit deux paires). Les électrodes de mesure 8 diamétralement opposées sont distantes, avantageusement, de onze mm, et les électrodes d'alimentation 10 associées sont distantes, au plus, de deux mm desdites électrodes de mesure 8. Les électrodes d'alimentation 10 d'une même tête de mesure sont reliées entre elles par l'intermédiaire d'une résistance 12, de l'ordre de deux Ohms, de façon à obtenir un courant constant dans chaque branche de circuit reliant chaque électrode d'alimentation 10 à une alimentation 14 stabilisée en courant continu. Cette alimentation 14 peut débiter cinq ampères sous une tension de huit volts. L'intensité fixée à cinq ampères (1,25 A pour chaque électrode d'alimentation 10) est un bon compromis pour obtenir d'une part une tension finale suffisante, et d'autre part, pour qu'il n'y ait aucun échauffement des électrodes d'amenée de courant 10. Les électrodes de mesure 8 sont reliées entre elles de façon à mesurer la résultante des différences de potentiel mesurées. La tension obtenue est amplifiée à l'aide d'un amplificateur 16 relié à un filtre actif 18 permettant d'éliminer les bruits de fond. La tension finale est affichée à l'aide d'un voltmètre à affichage numérique 20 pouvant détecter le microvolt. Lorsque la tension finale est supérieure à un certain seuil ou inférieure à un autre seuil, un système d'alarme 22 se déclenche. Le système d'alarme 22 est relié à un détecteur de seuil de la tension 24, réglable. La référence 26 indique la partie non soudée de la pièce plate 0.

La figure 3 représente une pièce soudée 0 soumise au contrôle conforme à l'invention. La pièce soudée 0 se déplace dans le sens indiqué par la flèche D (le déplacement de la pièce se faisant généralement à la main). La soudure 2 à contrôler subit préalablement un test mécanique à l'aide d'un marteau pneumatique 28, muni d'une bouterolle 30 se déplaçant comme indiqué sur la figure, fixée sur une colonne 32 et reliée à une électrovanne non représentée. Après avoir placé la soudure 2 de façon convenable entre les têtes de mesure 4 et 6, celle-ci peut subir le contrôle non destructif. Les têtes de mesure 4 et 6 sont maintenues en place à l'aide d'un support rigide 34. La référence 36 représente le cordon d'amenée des informations électriques, la référence 38 une plaque métallique permettant de mettre la pièce soudée en porte à faux.

Bien entendu, au lieu du marteau pneumatique, 28, on peut utiliser tout autre outil à percussion, tel que marteau, marteau électrique, chute calibrée, pot vibrant pour effectuer le test mécanique.

Les figures 4 et 5 représentent un deuxième mode de réalisation du dispositif. La tête de mesure supérieure 3 ainsi que la tête inférieure non représentée comprennent deux électrodes de mesure 8 et deux électrodes d'alimentation 10 placées de façon symétrique par rapport à la soudure 2. Ces têtes de mesure sont utilisées dans le cas de pièces soudées 1 possédant une forme quelconque. Ceci nous montre que le nombre n de paires d'électrodes utilisé dépend de la forme de la pièce soudée dont on veut contrôler les soudures (n est un nombre entier différent de zéro).

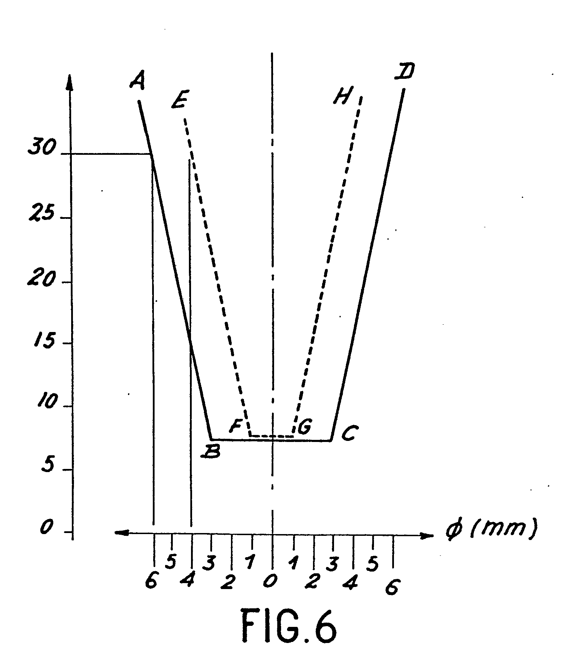

La figure 6 illustre la méthode rhéométrique utilisée pour le contrôle non destructif des soudures par points, conformément à l'invention. Comme le montre la figure 3, la pièce 0 à contrôler se déplace entre les deux têtes de mesure 4 et 6 fixes. Les courbes ABCD et EFGH montrent la variation de la tension (exprimée en microvolts $\mu$V) en fonction de la distance entre les électrodes de mesure et le centre de la soudure (exprimée en millimètre, mm). Lorsque les électrodes de mesure s'approchent de la soudure, on enregistre une diminution linéaire de la tension (segment AB ou EF); puis lorsque les électrodes de mesure chevauchent la soudure, on obtient un palier sur lequel la tension reste constante. Ce palier (segment BC ou FG) correspond au diamètre de la soudure. Enfin, lorsque les électrodes de mesure s'éloignent de la soudure, on enregistre une augmentation linéaire de la tension (segment CD ou GH). Il est à noter que les courbes ABCD et EFGH sont symétriques par rapport au centre de la soudure et que la meilleure position des électrodes est telle que celles-ci entourent au mieux la soudure à contrôler.

Si les électrodes de mesure sont placées à 4 mm du centre de la soudure, on obtient une tension de 30 $\mu$V pour un diamètre de 2 mm (courbe EFGH) et une tension de 15 $\mu$V pour un diamètre de 6 mm. On constate donc que la tension diminue avec l'augmentation du diamètre de la soudure, pour une position donnée des électrodes. Il s'ensuit une relation simple entre la tension mesurée avec le dispositif de l'invention et le diamètre de la soudure.

Après avoir fait un étalonnage en mesurant par des moyens appropriés différents diamètres de soudure et mesurer la tension correspondante, on peut par la suite par simple lacture de la tension en déduire le diamètre de la soudure. Connaissant le diamètre de la soudure, on en déduit son efficacité. En effet, plus le diamètre de la soudure est grand, plus la soudure sera efficace.

L'étalonnage se fait à chaque fois que l'on change de type de soudure. En effet, les matériaux constituant les pièces soudées ne conduisent pas tous le courant de la même façon, il s'ensuit des variations dans la valeur des tensions. Le détecteur de seuil 22 permet de régler l'appareil de contrôle en fonction des tensions à mesurer. Les soudures permettant de faire cet étalonnage sont arrachées de la pièce soudée de façon à être mesurée avec, par exemple, un pied à coulisse (contrôle destructif). Si la tension mesurée n'est pas comprise dans l'intervalle des seuils fixés, une alarme 24 se déclenche. Ceci permet de s'assurer, par exemple, que toutes les électrodes sont en contact avec la pièce soudée, ou que la soudure a été détruite lors du test mécanique (résistance infinie, donc tension infinie).

Ce test mécanique permet de détruire les soudures dites collées. Ce test mécanique peut être réalisé à l'aide d'un marteau pneumatique réglé à environ 7 Kg/cm². Il consiste en une dizaine de chocs, espacés dans le temps d'environ 0,5 seconde. Les percussions ont lieu tous les 90° à quelques millimètres des bords de la soudure ou sur la soudure même. La pièce soudée est fixée en porte à faux sur une plaque métallique 38. On peut, bien entendu, utiliser tout autre outil à percussion pour réaliser ce test mécanique. Ce test mécanique permet de différencier trois types de soudures: les bonnes, les médiocres et les mauvaises.

Après ce test mécanique, suivi de l'étalonnage comme décrit précédemment, les soudures d'un type de pièce donné peuvent être contrôlées à l'aide du dispositif conforme à l'invention.

Dans le cas de pièces soudées plates on utilise le dispositif conforme au premier mode de réalisation de l'invention. La soudure est placée de façon symétrique entre les deux têtes de mesure. Les électrodes au nombre de quatre (n paires d'électrodes avec n égale 2) sont disposées à 90° l'une de l'autre et placées de façon à entourer le mieux possible la soudure à contrôler, d'où leur position symétrique par rapport à l'axe de la soudure. Comme il n'est pas toujours évident de trouver l'axe ou centre de la soudure, les électrodes de mesure sont reliées entre elles de façon à obtenir une tension résultante.

Des essais ont été effectués en positionnant les électrodes de mesure plus ou moins sur la soudure. Ces résultats ont montré l'efficacité du système d'intégration du dispositif comprenant quatre électrodes de mesure reliées entre elles comme décrit précédemment.

Dans le cas de soudures placées à proximité des bords de la pièce, des essais ont été effectués de façon à montrer l'influence des bords. Les effets de bords sont négligeables: inférieur à la reproductibilité de la mesure pour une soudure donnée. La tension obtenue sur une soudure située à 27 mm ou à 3 mm des bords est alors identique.

Dans le cas de soudures effectuées à proximité l'une de l'autre, il peut exister un couplage électrique. La tension finale obtenue ne sera pas celle que l'on attend. Des essais sur des traverses de levage effectuées à l'aide du dispositif conforme au deuxième mode de réalisation (figures 4 et 5) ont pu mettre en évidence ce phénomène. Dans ce cas, l'entreaxe des soudures n'était que de 10 à 15 mm (les soudures étaient tangentes ou distantes de quelques millimètres); ceci ne constitue pas une limitation à la méthode car tout se passe comme si on avait affaire à une soudure unique au lieu de soudures distinctes.

Ce procédé et ce dispositif de contrôle des soudures par points permettent de déterminer d'une façon simple le diamètre d'une soudure avec une précision de ± 1 mm, donc d'en déduire son efficacité.

**Revendications**

1. Procédé de contrôle non destructif de soudures par points d'une pièce soudée, dans lequel les soudures (2) subissent, d'abord, un test mécanique permettant d'éprouver les soudures au cours duquel seules les soudures dites «collées» sont détruites, et dans lequel les soudures restant intactes sont soumises à un contrôle électrique, ledit contrôle électrique étant caractérisé en ce que chacune desdites soudures est soumise à un contrôle ponctuel consistant à faire circuler, entre au moins deux électrodes (10) d'alimentation en contact avec la zone de soudure et situées de part et d'autre de la surface de la soudure, un courant électrique puis, à mesurer aux bornes d'au moins deux électrodes (8) de mesure situées de part et d'autre de la surface de la soudure une différence de potentiel et à déterminer à partir de cette mesure le diamètre de la soudure.

2. Procédé selon la revendication 1, caractérisé en ce que le test mécanique consiste en un certain nombre de chocs tout autour de la zone de soudure pendant un court instant.

3. Procédé selon la revendication 1, caractérisé en ce que le test mécanique consiste en un certain nombre de chocs sur la soudure pendant un court instant.

4. Dispositif de contrôle électrique non destructif de soudure par points d'une pièce soudée (0, 1) comportant des électrodes d'alimentation permettant de faire circuler un courant électrique dans la zone de soudure à étudier, caractérisé en ce qu'il comprend un système de détection formé de deux têtes de mesure (4 et 6) identiques, constituées chacune par n paires desdites électrodes d'alimentation (10) et par n paires d'électrodes de mesure (8), permettant de mesurer une différence de potentiel dans la zone de soudure à étudier et de déterminer le diamètre de ladite soudure, n étant un entier différent de zéro, chacune desdites paires d'électrodes d'alimentation (10), qui appartiennent à une même tête de mesure, étant associée à une paire d'électrodes de mesure (8), qui appartiennent à la même tête de mesure, les deux têtes de mesure (4 et 6) étant placées de part et d'autre de la surface de la soudure et reliée à une alimentation stabilisée en courant continu (14), à un ensemble de mesure et à un appareillage de visualisation (20).

5. Dispositif selon la revendication 4, caractérisé en ce que chacune desdites paires d'électrodes de mesure (8) est alignée avec la paire d'électrodes d'alimentation (10), qui lui est associée, et est placée de façon symétrique par rapport au centre de la soudure de telle façon que les électrodes de mesure (8) d'une même paire soient distantes au plus de 11 mm entre elles et que chacune des électrodes de mesure d'une même paire soit distante au plus de 2 mm de l'électrode correspondante de la paire d'électrodes d'alimentation, qui lui est associée.

6. Dispositif selon l'une quelconque des revendications 4 et 5, caractérisé en ce que les électrodes de mesure (8) d'une même tête de mesure (4 ou 6) sont reliées électriquement entre elles de façon à mesurer la résultante des différences de potentiel qui existent entre chaque électrode de mesure de l'une des deux têtes de mesure et l'électrode correspondant de l'autre tête de mesure.

7. Dispositif selon l'une quelconque des revendications 4 à 6, caractérisé en ce que les électrodes d'alimentation (10) d'une même tête de mesure (4 ou 6) sont reliées entre elles par l'intermédiaire d'au moins une résistance (12) permettant d'obtenir un courant constant dans chaque électrode d'alimentation (10).

## Claims

1. Process for the non-destructive testing of spot welds on a welded workpiece, in which welds (2) have previously been subjected to a mechanical trial enabling the welds to be proved, during which only «failed» welds are destroyed, and in which the welds remaining intact are subjected to electrical testing, said electrical testing being characterized in that each of said welds is subjected to a test comprising circulating an electric current between at least two supply electrodes (10) in contact with the weld zone and located on either side of the surface of the weld, measuring a potential difference at the terminals of at least two measurement electrodes (8) located on either side of the surface of the weld, and determining, from the resulting measurement, the diameter of the weld.

2. Process according to claim 1 characterized in that the mechanical trial comprises a predetermined number of shocks within a short period all around the weld zone.

3. Process according to claim 1 characterized in that the mechanical trial comprises a predetermined number of shocks, within a short period, on the weld.

4. Apparatus for the non-destructive electrical testing of spot welds on a welded workpiece (0, 1) comprising supply electrodes enabling an electric current to circulate in a weld zone under test, characterized in that it comprises a detection system formed of two identical measuring heads (4 and 6), each comprising n pairs of said supply electrodes (10), and n pairs of measurement electrodes (8), enabling measurement of potential difference in a weld zone under test, and determination of the diameter of said weld, n being an integer different from zero, each of said pairs of supply electrodes (10) belonging to any one measuring head being associated with a pair of measurement electrodes (8) belonging to the same measuring head, the two measuring heads (4 and 6) being located on either side of the weld surface and connected to a stabilized direct current source (14), to a measuring unit and to a display means (20).

5. Apparatus according to claim 4 characterized in that each of·said pairs of measurement electrodes (8) is aligned with its corresponding pair of supply electrodes (10), and is located symmetrically with respect to the centre of the weld, whereby the measurement electrodes (8) of one pair are at most 11 mm apart, and each of the measurement electrodes of any one pair are at most 2 mm from the corresponding supply electrode of its respective associated pair of supply electrodes.

6. Apparatus according to either of claims 4 and 5 characterized in that the measurement electrodes (8) of any one measuring head (4 or 6) are electrically interconnected to measure the resultant of the potential differences existing between each measurement electrode of the respective measuring head and the corresponding electrode of the other measuring head.

7. Apparatus according to any one of claims 4 to 6 characterized in that the supply electrodes (10) of any one measuring head (4 or 6) are interconnected through at least one resistor (12), enabling a constant current to be obtained in each supply electrode (10).

## Patentansprüche

1. Verfahren zum zerstörungsfreien Prüfen von Punktschweissungen eines geschweissten Teiles, bei dem zunächst die Schweissungen (2) einem mechanischen Test unterworfen werden, der eine Überprüfung·der Schweissungen erlaubt, in dessen Verlauf lediglich die Schweissungen, die als «geklebt» bezeichnet werden, zerstört werden, und bei dem die unzerstört bleibenden Schweissungen einer elektrischen Prüfung unterworfen werden, wobei diese elektrische Prüfung dadurch gekennzeichnet ist, dass jede dieser Schweissungen einer punktuellen Prüfung unterworfen wird, bei der ein elektrischer Stromfluss zwischen wenigstens zwei Versorgungselektroden (10) erzeugt wird, die in Kontakt mit der Schweisszone stehen und auf beiden Seiten der Schweissfläche angeordnet sind, um zwischen wenigstens zwei Messelektroden (8), die auf beiden Seiten der Schweissfläche angeordnet sind, eine Spannungsdifferenz zu messen und um ausgehend von dieser Messung den Durchmesser der Schweissung zu bestimmen.

2. Verfahren nach Anspruch 1, dadurch gekennzeichnet, dass der mechanische Test aus einer bestimmten Anzahl von Stössen während eines kurzen Zeitmomentes, die genau um den Schweissbereich herum einwirken, besteht.

3. Verfahren nach Anspruch 1, dadurch gekennzeichnet, dass der mechanische Test aus einer bestimmten Anzahl von Stössen auf die Schweissung während eines kurzen Zeitmomentes besteht.

4. Vorrichtung zum zerstörungsfreien elektrischen Prüfen von Punktschweissungen eines geschweissten Teiles (0, 1), mit Versorgungselektroden, die die Erzeugung eines elektrischen Stromflusses in dem zu prüfenden Bereich ermöglichen, dadurch gekennzeichnet, dass die Vorrichtung ein Erfassungssystem enthält, das aus zwei identischen Messköpfen (4 und 6) gebildet wird, von denen jeder aus n Paaren dieser Versorgungselektroden (10) und aus n Paaren von Messelektroden (8) besteht, die es ermöglichen, eine Spannungsdifferenz in dem zu prüfenden Schweissbereich zu messen und den Durchmesser dieser Schweissung zu bestimmen, wobei n eine ganze Zahl ist, die ungleich Null ist, dass jedem Paar dieser Versorgungselektroden (10), die am selben Messkopf vorgesehen sind, ein Paar von Messelektroden (8) zugeordnet ist, die am selben Messkopf vorgesehen sind, und dass die beiden Messköpfe (4 und 6) auf beiden Seiten der Schweissfläche angeordnet sind und an eine stabilisierte Gleichstromversorgung (14), an eine Messanordnung und an ein Anzeigegerät (20) angeschlossen sind.

5. Vorrichtung nach Anspruch 4, dadurch gekennzeichnet, dass jedes der Messelektrodenpaare (8) zu dem Versorgungselektrodenpaar (10) ausgerichtet ist, dem es zugeordnet ist, und in symmetrischer Weise bezüglich des Schweissungsmittelpunktes derart angeordnet ist, dass die Messelektroden (8) desselben Paares um mehr als 11 mm zueinander beabstandet sind, und dass jede Messelektrode desselben Paares um mehr als 2 mm von der entsprechenden Elektrode des Versorgungselektrodenpaares, dem sie zugeordnet ist, beabstandet ist.

6. Vorrichtung nach einem der Ansprüche 4 und 5, dadurch gekennzeichnet, dass die Messelektroden (8) desselben Messkopfes (4 oder 6) auf elektrische Weise untereinander derart verbunden sind, dass sie die sich ergebende Spannungsdifferenz messen, die zwischen jeder Messelektrode des einen der beiden Messköpfe und der entsprechenden Elektrode des anderen Messkopfes besteht.

7. Vorrichtung nach einem der Ansprüche 4 bis 6, dadurch gekennzeichnet, dass die Versorgungselektroden (10) desselben Messkopfes (4 oder 6) untereinander durch Zwischenschaltung wenigstens eines Widerstandes (12) verbunden sind, der es ermöglicht, einen konstanten Strom in jeder Versorgungselektrode (10) zu erhalten.

FIG.1

0 030 889

FIG.2

FIG.3

FIG.5

FIG.4

9

FIG.6